# EUROPEAN PATENT APPLICATION

(11) **EP 4 671 537 A1**
(43) Date of publication of application: **31.12.2025**
(21) Application number: 23932150.8
(22) Date of filing: 05.12.2023
(51) Int. Cl.: F03D 80/00, C23C 4/12, F03D 1/06

(54) **METHOD FOR CONSTRUCTING FRONT EDGE PROTECTIVE LAYER FOR WIND TURBINE BLADE, AND PROTECTIVE LAYER FOR WIND TURBINE BLADE**

(30) Priority: 07.04.2023 JP 2023062708
(71) Applicant: Mitsubishi Heavy Industries, Ltd., Tokyo 100-8332 (JP)
(72) Inventor: SHIBATA, Masaaki, Tokyo 100-8332 (JP); TAKAYANAGI, Kazufumi, Tokyo 100-8332 (JP); KOREMATSU, Yasuhiro, Tokyo 100-8332 (JP); OKANO, Yasushi, Tokyo 100-8332 (JP); YAMADA, Tomokazu, Tokyo 100-8332 (JP)
(74) Representative: Cabinet Beau de Loménie
(86) International application number: PCT/JP2023/043459
(87) International publication number: WO 2024/209741

(57) **Abstract**

Provided is a method for manufacturing a wind turbine blade with which it is possible to obtain a protective layer having a desired thickness and quality, by improving the positional accuracy of thermal spraying. Provided is a method for manufacturing a wind turbine blade (5) in which a protective layer is provided on a front edge (16) side of a tip end portion (12) in a blade length direction (L1) of a wind turbine blade body (5a) formed from FRP, the method comprising: a first thermal spraying step for performing thermal spraying in the blade length direction (L1); a blade chord position changing step for changing a position such that thermal spraying is performed at an adjacent position that is adjacent, in a blade chord direction (C1), to the protective layer (30) formed in the first thermal spraying step; and a second thermal spraying step for performing thermal spraying in the blade length direction (L1) at the adjacent position.

## Description

### Technical Field

The present disclosure relates to a method for constructing a leading edge protective layer for a wind turbine blade and a protective layer for a wind turbine blade.

### Background Art

A wind turbine blade collides with a foreign substance in the air (for example, raindrops or dust) and is eroded as a wind turbine rotor rotates, which causes erosion on a leading edge side of the wind turbine blade. In order to protect the wind turbine blade from the erosion, formation of a protective layer for erosion resistance on a leading edge portion of the wind turbine blade is known (refer to PTL 1).

### Citation List

### Patent Literature

[PTL 1] Japanese Unexamined Patent Application Publication No. 2022-175830

### Summary of Invention

### Technical Problem

In a case where thermal spraying is performed on the leading edge portion of the wind turbine blade, it is difficult to appropriately determine a thermal spraying direction due to a large curvature of a leading edge. For this reason, there is a concern that a desired thickness or quality of the protective layer may not be obtained.

The present disclosure has been made in view of such circumstances, and an object of the present disclosure is to provide a method for constructing a leading edge protective layer for a wind turbine blade and a protective layer for a wind turbine blade capable of improving position accuracy of thermal spraying to obtain a protective layer having a desired thickness or quality.

### Solution to Problem

According to an aspect of the present disclosure, there is provided a method for constructing a leading edge protective layer for a wind turbine blade that is provided with a protective layer at a tip portion and a leading edge portion of a wind turbine blade main body made of FRP in a blade spanwise direction, the method including a first thermal spraying step of performing thermal spraying in the blade spanwise direction, a blade chord position changing step of performing a position change such that the thermal spraying is performed at an adjacent position adjacent to a blade chord direction of the protective layer formed in the first thermal spraying step, and a second thermal spraying step of performing the thermal spraying in the blade spanwise direction at the adjacent position.

According to an aspect of the present disclosure, there is provided a protective layer for a wind turbine blade including a wind turbine blade main body made of FRP and a protective layer provided at a tip portion and a leading edge portion of the wind turbine blade main body in a blade spanwise direction, in which a thickness of an end portion of the protective layer formed on a blade surface of the wind turbine blade main body in a blade chord direction gradually decreases toward an edge of the end portion. Advantageous Effects of Invention

It is possible to form the protective layer having a desired thickness or quality on the wind turbine blade.

### Brief Description of Drawings

Fig. 1 is a schematic configuration diagram showing a wind power generation device using a wind turbine blade according to an embodiment of the present disclosure.
Fig. 2 is a plan view of the wind turbine blade.
Fig. 3 is a front view of the wind turbine blade of Fig. 2.
Fig. 4A is a cross-sectional view of the wind turbine blade shown in Figs. 2 and 3.
Fig. 4B is a cross-sectional view of the wind turbine blade shown in Figs. 2 and 3.
Fig. 5 is a front view of an installation state of the wind turbine blade at a time of formation of a protective layer.
Fig. 6 is a cross-sectional view at a support position in Fig. 5.
Fig. 7 is a partially enlarged front view of a formation range of the protective layer formed at a tip of the wind turbine blade.
Fig. 8 is a partially enlarged front view of a formation order of the protective layer.
Fig. 9 is a partially enlarged cross-sectional view of a forming direction of the protective layer in a blade chord direction.
Fig. 10 is a cross-sectional view of an end portion of the protective layer formed on a blade surface of the wind turbine blade in the blade chord direction.

### Description of Embodiments

Hereinafter, an embodiment according to the present disclosure will be described with reference to drawings.

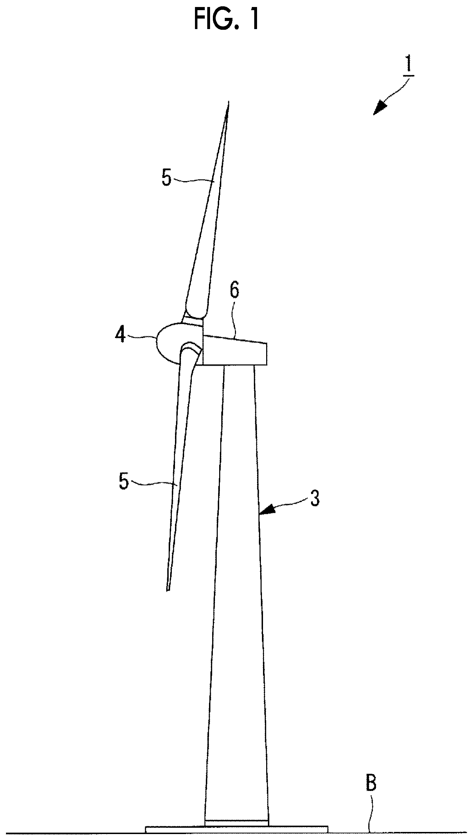

As shown in Fig. 1, a wind power generation device 1 has a tower 3 that is erected on an installation surface B, a nacelle 6 that is installed at an upper end of the tower 3, and a rotor head 4 that is provided in the nacelle 6 around a substantially horizontal axis in a rotatable manner.

A plurality of (for example, three) wind turbine blades 5 are attached to the rotor head 4 around the rotational axis of the rotor head 4 in a radial manner. Accordingly, force of wind that has hit the wind turbine blade 5 from a direction of the rotational axis of the rotor head 4 is converted into power for causing the rotor head 4 to rotate around the rotational axis thereof. The obtained power is converted into electric power by a generator (not shown), and is supplied to the outside.

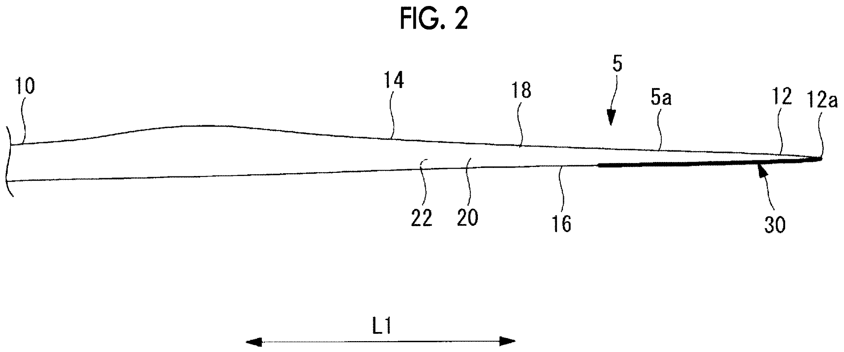

As shown in Fig. 2, the wind turbine blade 5 includes a blade root portion 10 that is attached to the rotor head 4, a blade tip portion (tip portion) 12 that is located farthest from the rotor head 4, and an airfoil portion 14 that extends between the blade root portion 10 and the blade tip portion 12. In Fig. 2, a blade spanwise direction L1 is a horizontal direction.

The wind turbine blade 5 has a leading edge 16 and a trailing edge 18, from the blade root portion 10 to the blade tip portion 12. An outer shape of the wind turbine blade 5 is defined by a pressure-side surface 20 that is a pressure surface (positive pressure surface), and a suction-side surface 22 that is a negative pressure surface facing the pressure-side surface 20. The wind turbine blade 5 is made of fiber-reinforced plastic (FRP). As the FRP, carbon fiber-reinforced plastic (CFRP), glass fiber-reinforced plastic (GFRP), or the like is used. An entire length of the wind turbine blade 5 from the blade root portion 10 to the blade tip portion 12 is in a 100 m class, for example, 80 m or more and 150 m or less. Further, a wind turbine blade of a 200 m class may be employed as the wind turbine blade 5 of the present embodiment.

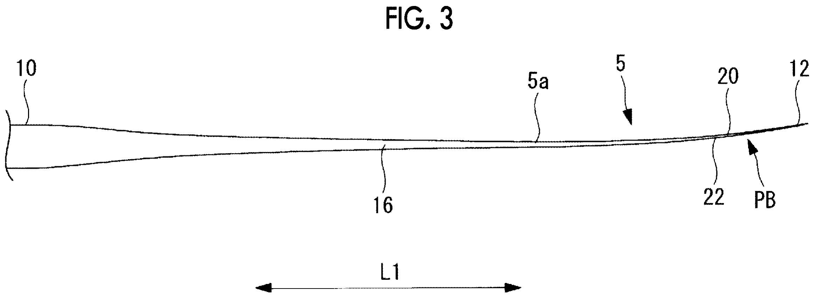

As shown in Fig. 3, the wind turbine blade 5 is provided with a prebend PB that is bent in advance on a side of the blade tip portion 12. A bent amount of the prebend PB is decided in advance on the assumption that the wind turbine blade 5 receives wind pressure during operation. Thus, the prebend PB is bent such that the pressure-side surface 20 receiving the wind pressure is recessed and the suction-side surface 22 is protruded.

As shown in Fig. 2, a protective layer 30 is formed for a wind turbine blade main body 5a at the blade tip portion 12 of the wind turbine blade 5 and on a predetermined region including the leading edge 16 (leading edge portion). A formation range of the protective layer 30 is indicated by a thick line in Fig. 2. The formation range of the protective layer 30 in the blade spanwise direction L1 is 20 m to 40 m, preferably about 30 m, from a tip 12a of the blade tip portion 12. The formation range of the protective layer 30 is not limited thereto. For example, in a region where a circumferential speed exceeds 90 m/s, the formation range is set to a range of approximately 1/3 of the entire length of the wind turbine blade 5 from a tip of the wind turbine blade 5.

The protective layer 30 is made of a material having excellent wear resistance, such as a cermet or a Co alloy such as a cobalt (Co)-based alloy. The protective layer 30 is formed by, for example, high-velocity oxygen-fuel (HVOF) spraying.

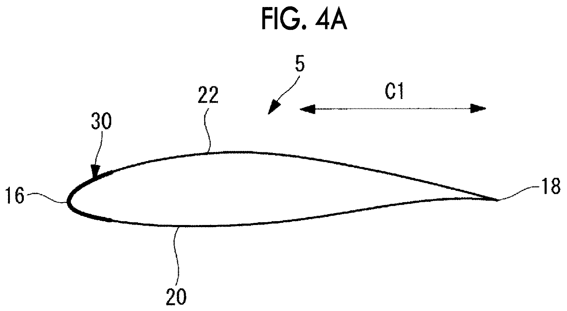

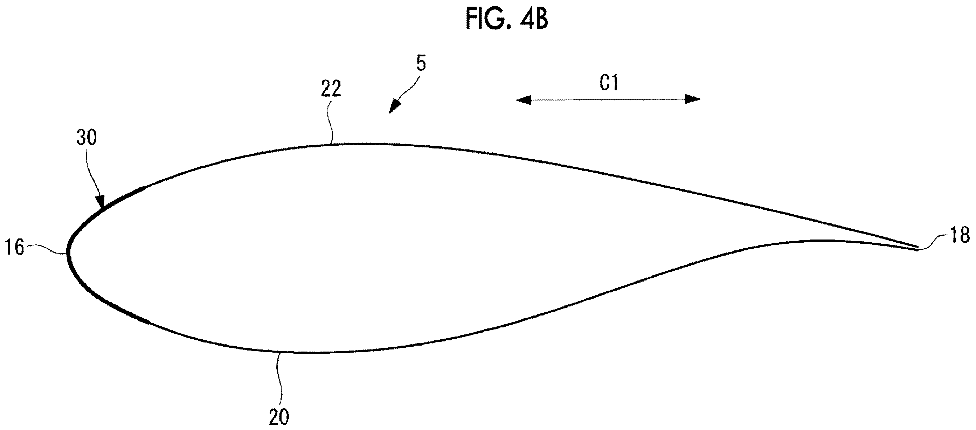

Figs. 4A and 4B show cross sections of the wind turbine blade 5. In the drawings, a horizontal direction indicates a blade chord direction (chord direction) C1. In a case where the entire length of the wind turbine blade 5 is R, Fig. 4A is the cross section of the wind turbine blade 5 at a position of 0.9R, and Fig. 4B is the cross section of the wind turbine blade 5 at a position of 0.7R.

In the cross section of Fig. 4A, a blade chord length (chord length) c is about 1 m. A blade thickness ratio t/c in a case where a maximum thickness of a blade thickness is t is 18%.

In the cross section of Fig. 4B, the blade chord length c is about 2 m, and the blade thickness ratio t/c is 25%.

As indicated by thick lines in Figs. 4A and 4B, the protective layer 30 is formed from the pressure-side surface 20 to the suction-side surface 22 with the leading edge 16 interposed therebetween. The formation range of the protective layer 30 is decided in consideration of erosion of the wind turbine blade 5 due to raindrops or the like.

Next, a formation step of the protective layer 30 described above will be described.

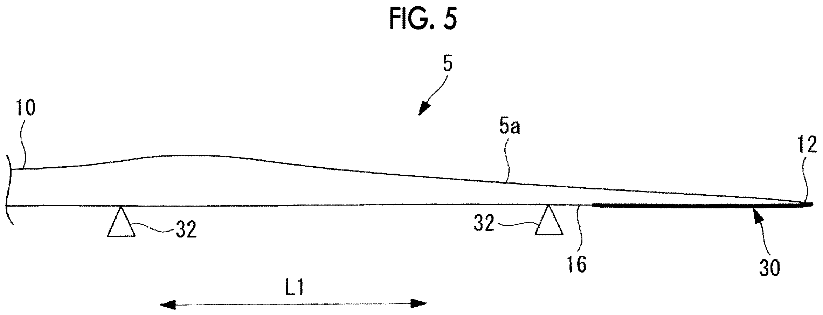

As shown in Fig. 5, the outer shape of the wind turbine blade main body 5a of the wind turbine blade 5 is molded, and then the wind turbine blade 5 is installed in a posture in which the blade spanwise direction L1 is substantially horizontal and the leading edge 16 faces downward (posture setting step). That is, the wind turbine blade 5 is installed upright such that the blade chord direction C1 of the wind turbine blade main body 5a faces a substantially vertical direction. In this case, the wind turbine blade 5 is supported from below by a plurality of support tables 32 provided in the blade spanwise direction L1 at predetermined spacings (support step).

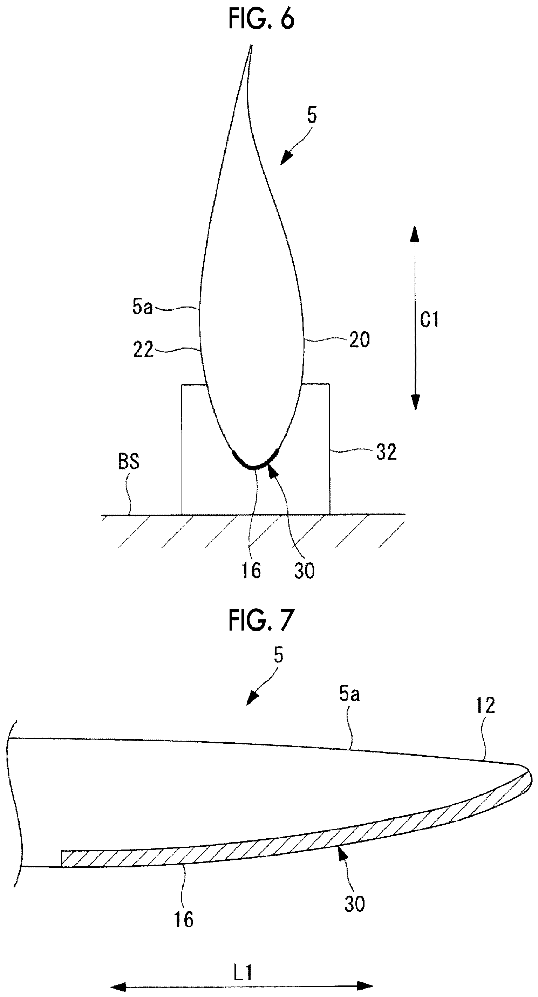

Fig. 6 shows that the plurality of support tables 32 support a side of the leading edge 16 of the wind turbine blade 5. Each support table 32 is provided on an installation surface at time of formation BS. The wind turbine blade 5 may be supported with the side of the leading edge 16 facing downward. For example, the wind turbine blade 5 may be supported by a hanging member such as a wire hung from above the wind turbine blade 5 to embrace and lift the leading edge 16 facing downward, instead of the method of supporting the wind turbine blade 5 from below by the support tables 32 described above.

As shown in Figs. 5 and 6, a thermal spraying unit performs the thermal spraying in a state where the leading edge 16 faces downward. The thermal spraying unit accelerates, with a carrier gas, a thermal spraying material that is thermally melted or softened in a droplet or particle state to blow the thermal spraying material onto a surface of the wind turbine blade main body 5a.

Fig. 7 shows a thermal spraying range formed on the blade tip portion 12 of the wind turbine blade 5. As shown in the drawing, the protective layer 30 is formed in a predetermined range (leading edge portion) on the side of the leading edge 16 of the wind turbine blade 5.

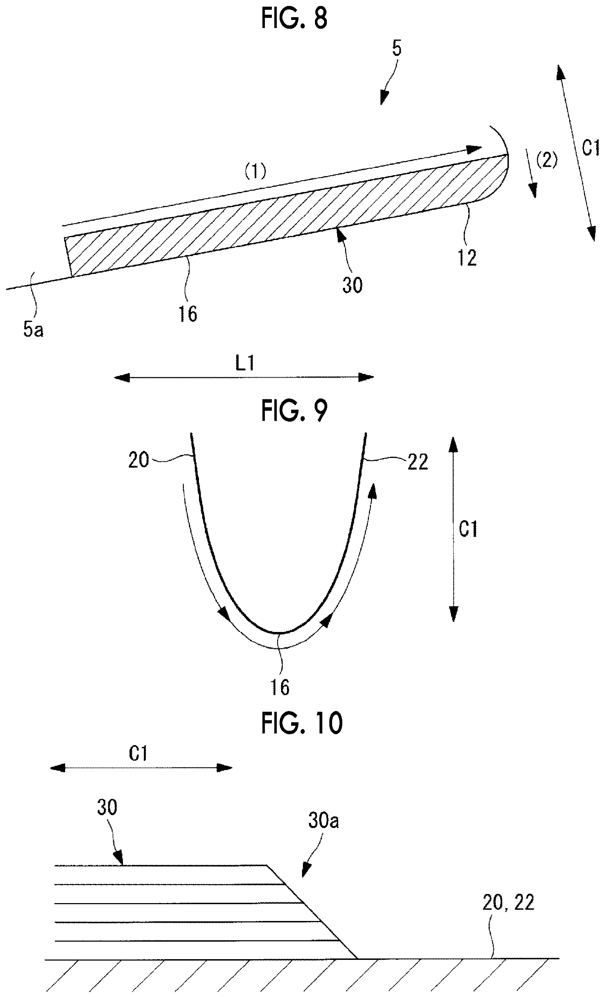

As shown in Fig. 8, in the thermal spraying, the thermal spraying unit is caused to reciprocate in the blade spanwise direction L1 (direction indicated by (1) in drawing) (first thermal spraying step). Accordingly, the protective layers are laminated in a plurality of layers. A thickness of the protective layer is, for example, about 500 µm to 600 µm. An irradiation width of the thermal spraying unit on a blade surface is, for example, approximately 10 mm.

After the first thermal spraying step, a position of the thermal spraying unit is changed to perform the thermal spraying at an adjacent position adjacent to the blade chord direction C1 (direction indicated by (2) in drawing) (blade chord position changing step). Then, at the adjacent position, the thermal spraying unit is reciprocated in the blade chord direction C1 in the blade spanwise direction L1 (direction indicated by (1) in the drawing), as in the first thermal spraying step, to perform thermal spraying (second thermal spraying step). In the first thermal spraying step and the second thermal spraying step, the thermal spraying unit is scanned to reciprocate in the blade spanwise direction L1 in the formation. This is because a change in curvature of the blade surface in the blade spanwise direction L1 is smaller than that in the blade chord direction C1.

As shown in Fig. 9, a position change direction in the above blade chord position changing step is a direction from one blade surface (for example, pressure-side surface 20 or suction-side surface 22) of the wind turbine blade 5 toward the other blade surface (for example, suction-side surface 22 or pressure-side surface 20) via the leading edge 16, as indicated by an arrow in the drawing.

Fig. 10 shows a cross section of an end portion 30a of the protective layer 30, which is formed on the blade surface (pressure-side surface 20 or suction-side surface 22) of the wind turbine blade 5, in the blade chord direction C1. As shown in the drawing, a thickness of the end portion 30a of the protective layer 30 is formed to gradually decrease toward an edge of the end portion 30a (right side in drawing). This is performed by gradually shifting the thermal spraying unit in the blade chord direction C1 in a case where the end portion 30a of the protective layer 30 is thermally sprayed to laminate the protective layer 30 in a thickness direction (end portion thermal spraying step).

Actions and effects of the present embodiment described above are as follows.

The thermal spraying is performed in the blade spanwise direction L1, which is a direction in which a curvature of the wind turbine blade main body 5a does not change significantly. Accordingly, it is possible to improve the position accuracy of the thermal spraying.

The blade chord position is changed such that the thermal spraying is performed at the position adjacent to the protective layer 30, which is formed in the first thermal spraying step, in the blade chord direction C1. The thermal spraying in the second thermal spraying step is performed in the blade spanwise direction L1. Since the position change is made to the adjacent position in the blade chord direction C1, it is possible to make the change in curvature of the wind turbine blade main body 5a relatively small. Accordingly, it is possible to improve position accuracy of the thermal spraying.

In a case where the position in the blade chord direction C1 during the thermal spraying is changed, the position change is made from one blade surface 20 or 22 of the wind turbine blade main body 5a to the other blade surface 22 or 20 thereof via the leading edge 16. Therefore, it is possible to form the protective layer 30 on the side of the leading edge 16 in the series of steps.

The protective layer 30 is formed such that the thickness of the end portion 30a of the protective layer 30 in the blade chord direction C1 gradually decreases toward the edge of the end portion 30a. Accordingly, it is possible to minimize a loss of a fluid flowing through the end portion 30a of the protective layer 30 as much as possible. The thickness of the end portion of the protective layer 30 in the blade spanwise direction L1 may gradually decrease toward the edge of the protective layer 30.

Even in a case of the large wind turbine blade 5 exceeding 80 m, it is possible to form the protective layer 30 with high accuracy since the bending of the wind turbine blade main body 5a is small.

The method for constructing a leading edge protective layer for a wind turbine blade and the protective layer for the wind turbine blade according to each of the embodiments described above are understood as follows, for example.

According to a first aspect of the present disclosure, there is provided a method for constructing a leading edge protective layer for a wind turbine blade (5) that is provided with a protective layer (30) at a tip portion (12) and a leading edge (16) side of a wind turbine blade main body (5a) made of FRP in a blade spanwise direction (L1), the method including a first thermal spraying step of performing thermal spraying in the blade spanwise direction, a blade chord position changing step of performing a position change such that the thermal spraying is performed at an adjacent position adjacent to a blade chord direction (C1) of the protective layer formed in the first thermal spraying step, and a second thermal spraying step of performing the thermal spraying in the blade spanwise direction at the adjacent position.

The thermal spraying is performed in the blade spanwise direction, which is a direction in which a curvature of the wind turbine blade main body does not change significantly. Accordingly, it is possible to improve the position accuracy of the thermal spraying.

The blade chord position is changed such that the thermal spraying is performed at the position adjacent to the protective layer, which is formed in the first thermal spraying step, in the blade chord direction. The thermal spraying in the second thermal spraying step is performed in the blade spanwise direction. Since the position change is made to the adjacent position in the blade chord direction, it is possible to make the change in curvature of the wind turbine blade main body relatively small. Accordingly, it is possible to improve position accuracy of the thermal spraying.

According to a second aspect of the present disclosure, in the method for constructing a leading edge protective layer for a wind turbine blade according to the first aspect, in the blade chord position changing step, a position in the blade chord direction is changed from one blade surface (20, 22) to the other blade surface (22, 20) of the wind turbine blade main body via a leading edge (16).

In a case where the position in the blade chord direction during the thermal spraying is changed, the position change is made from one blade surface of the wind turbine blade main body to the other blade surface thereof via the leading edge. Therefore, it is possible to form the protective layer on the side of the leading edge in the series of steps.

According to a third aspect of the present disclosure, the method for constructing a leading edge protective layer for a wind turbine blade according to the first aspect or the second aspect further includes an end portion thermal spraying step of performing the thermal spraying such that a thickness of an end portion of the protective layer formed on a blade surface of the wind turbine blade main body in the blade chord direction and/or the blade spanwise direction gradually decreases toward an edge of the end portion.

The protective layer is formed such that the thickness of the end portion of the protective layer in the blade chord direction and/or in the blade spanwise direction gradually decreases toward the edge of the end portion. Accordingly, it is possible to minimize the loss of the fluid flowing through the end portion of the protective layer as much as possible.

According to a fourth aspect of the present disclosure, in the method for constructing a leading edge protective layer for a wind turbine blade according to any one of the first aspect to the third aspect, a dimension of the wind turbine blade main body in the blade spanwise direction is 80 m or more.

Even in a case of the large wind turbine blade exceeding 80 m, it is possible to form the protective layer with high accuracy since the bending of the wind turbine blade main body is small.

According to a first aspect of the present disclosure, there is provided a protective layer for a wind turbine blade that is provided at a tip portion and a leading edge portion of a wind turbine blade main body made of FRP in a blade spanwise direction, in which a thickness of an end portion of the protective layer formed on a blade surface of the wind turbine blade main body in a blade chord direction gradually decreases toward an edge of the end portion.

The thickness of the end portion of the protective layer in the blade chord direction gradually decreases toward the edge of the end portion. Accordingly, it is possible to minimize the loss of the fluid flowing through the end portion of the protective layer as much as possible.

### Reference Signs List

1: wind power generation device
3: tower
4: rotor head
5: wind turbine blade
5a: wind turbine blade main body
6: nacelle
10: blade root portion
12: blade tip portion (tip portion)
12a: tip
14: airfoil portion
16: leading edge
18: trailing edge
20: pressure-side surface
22: suction-side surface
30: protective layer
30a: end portion
32: support table
B: installation surface
BS: installation surface at time of formation
C1: blade chord direction (chord direction)
L1: blade spanwise direction
PB: prebend

## Claims

1. A method for constructing a leading edge protective layer for a wind turbine blade that is provided with a protective layer at a tip portion and a leading edge portion of a wind turbine blade main body made of FRP in a blade spanwise direction, the method comprising:
a first thermal spraying step of performing thermal spraying in the blade spanwise direction;
a blade chord position changing step of performing a position change such that the thermal spraying is performed at an adjacent position adjacent to a blade chord direction of the protective layer formed in the first thermal spraying step; and
a second thermal spraying step of performing the thermal spraying in the blade spanwise direction at the adjacent position.

2. The method for constructing a leading edge protective layer for a wind turbine blade according to claim 1,
wherein in the blade chord position changing step, a position in the blade chord direction is changed from one blade surface to the other blade surface of the wind turbine blade main body via a leading edge.

3. The method for constructing a leading edge protective layer for a wind turbine blade according to claim 1, further comprising:
an end portion thermal spraying step of performing the thermal spraying such that a thickness of an end portion of the protective layer formed on a blade surface of the wind turbine blade main body in the blade chord direction and/or the blade spanwise direction gradually decreases toward an edge of the end portion.

4. The method for constructing a leading edge protective layer for a wind turbine blade according to claim 1,
wherein a dimension of the wind turbine blade main body in the blade spanwise direction is 80 m or more.

5. A protective layer for a wind turbine blade that is provided at a tip portion and a leading edge portion of a wind turbine blade main body made of FRP in a blade spanwise direction,
wherein a thickness of an end portion of the protective layer formed on a blade surface of the wind turbine blade main body in a blade chord direction gradually decreases toward an edge of the end portion.
